# EUROPEAN PATENT SPECIFICATION

(11) **EP 0 537 080 B1**
(45) Date of publication and mention of the grant of the patent: **21.08.1996**
(21) Application number: 92402767.5
(22) Date of filing: 09.10.1992
(51) Int. Cl.: B32B 27/08, B65D 75/58, B29C 55/08

(54) **Shrinkable thermoplastic film for use in packaging**
Schrumpfbarer Kunststoffilm zur Verwendung in der Verpackung
Film thermoplastique rétrécissable pour emploi dans l'emballage

(30) Priority: 11.10.1991 FR 9112554
(43) Date of publication of application: 14.04.1993
(73) Proprietor: SOPLARIL S.A., F-92800 Puteaux (FR); DU PONT DE NEMOURS INTERNATIONAL S.A., CH-1218 Le Grand-Saconnex (Genève) (CH)
(72) Inventor: Meilhon, Daniel, F-40180 Sort-en-Chalosse (FR); Wollak, Herbert Franz, CH-1228 Plan-Les-Ouates (CH)
(74) Representative: Hirsch, Marc-Roger

(56) References cited:
- EP-A- 0 206 826
- EP-A- 0 229 715
- EP-A- 0 372 886
- US-A- 3 344 975
- US-A- 4 801 486

## Description

### BACKGROUND OF THE INVENTION

The present invention relates to a bulk shrinkable thermoplastic film intended for packaging purposes, more particularly for bundling unit packs of individual objects to be packaged such as tinned food, cans, bottles or the like, as well as to a method for producing this film, and to packagings obtained by using it.

For packaging and storage of groups of objects of a range of varying types, thermoplastic films have for several years been taking the place of the conventionally-used cardboard boxes for bundling a grouping of identical or different objects to form a unitary pack. It is thus common to, for example, find packs of very many different types of object on the market such as canned food, bottles, or cans in a packaging consisting solely of shrinkable plastics film.

Such unitary packs are obtained in a known manner by bundling. Bundling is a method which consists of surrounding all of the objects to be packaged with a shrinkable thermoplastic resin film which can welded back onto itself so as to form a sleeve around the said grouped objects, the package then being shrunk by, for example, passing the whole assembly through an oven at a temperature that enables the thermoplastic resin constituting the film to soften, thus relieving internal stresses. Upon leaving the oven, rapid cooling ensures that the film closes tightly around the load contained therein. Thus a highly homogeneous bundle or unitary pack is obtained in which the thermoplastic film performs the function of a skin in tight contact with the surface of the packaged objects.

All thermoplastic polymers or copolymers, in the form of shrinkable films, having a sufficient tear resistance can be employed in this type of application. Nevertheless, the polyolefins and, more particularly, polyethylene or polypropylene, or even copolymers of ethylene and propylene and an unsaturated monomer such as vinyl acetate, are those that are most frequently used industrially.

The shrinkability and tear resistance properties required of such thermoplastic films lead, in the case of known films, to disadvantages when the packaged objects are being unpacked. In particular, it is necessary in view of the fact that the film is difficult to tear, to exercise quite significant force in order to stretch the film packaging in order to be able to clear a path for removing the objects contained in the pack. It may even sometimes be necessary to employ a cutting tool, which is dangerous, particularly in the home, with always the danger of destroying the packaged objects.

If one does manages to tear them, the tear is quite random and cannot be controlled, leading to the objects often falling out of the pack or, yet again, tearing takes place in the direction of extrusion of the film. This latter property presents no interest whatsoever. In effect, shrinkable thermoplastic films employed in this packaging application are obtained by extrusion followed by winding onto a large roll. When the film is made use of, the objects are packaged in the direction of the length of the film as it progressively unwinds from the roll. Under these conditions, the tear properties of the film in the direction of extrusion, in other words along the length of the film, do not in any way facilitate the subsequent complete opening of the pack.

US-P-Re 30 726 describes blow extrusion to film form of mixtures of polyethylene and ionomer resins. Such films have tear properties in the extrusion direction, in other words in the direction of the production machine. This film suffers from the disadvantages mentioned above. Such a film can only be employed for objects of small size such as packets of chewing-gum or cigarettes, and cannot be employed for continuous bundling of larger objects such as bottles, unitary packs, etc. Moreover, during handling of larger size articles, the purchaser grasps the packaging by the crescent-shaped openings left in the sides of the pack. In the case where the film possesses tear properties along the direction of the production machine, the packaging tears when it is handled by these openings. There is hence a need in the packaging industry to obtain a film which can be readily torn but which retains the necessary strength for bundling.

### SUMMARY OF THE INVENTION

The present invention enables the disadvantages and problems inherent in the prior art to be overcome, and provides a shrinkable thermoplastic film having, simultaneously, characteristics needed for bundling and characteristics needed for unpacking.

The present invention hence provides a shrinkable thermoplastic film formed from at least two thermoplastics resins, characterized in that its direction of tear lies substantially perpendicular to its direction of extrusion. The shrinkable thermoplastic film of the present invention tears substantially along a straight line.

The expression "substantially perpendicular" as employed in this present description means that tearing is obtained along a direction which deviates from the perpendicular by less than 20°.
Preferably, this deviation is less than 10°.
The expression "substantially along a straight line" as employed in this present specification means that tearing takes place along a line which is straight and only includes small amplitude waviness along the edge of the tear.

Tear resistance is obtained by the Elmendorf tear test and is expressed in N/mm.

The shrinkable thermoplastic film according to the present invention exhibits the same difficulty of tearing as the other known films in directions other than the substantially perpendicular direction, be these, for example, in an oblique direction or in the direction of extrusion or of the production machine, in other words along the length of the film.

This characteristic of the shrinkable thermoplastic film's ability to tear substantially perpendicularly to the direction of extrusion, it being understood that the direction of extrusion corresponds to the direction of the length of the film when leaving the extrusion machine, and to tear cleanly and substantially along a straight line, is a result of the particular method for preparing this film that is employed according to the present invention.

Thus, the present invention provides a shrinkable thermoplastic film that tears in the direction substantially perpendicular to the direction of extrusion with a tear that is substantially a straight line, this film comprising:
(a) at least one polyolefin layer; and
(b) at least one layer of a copolymer selected from ionic copolymers of:
   (1) α-olefins of formula R-CH=CH₂ wherein R is hydrogen or an alkyl radical having 1 to 8 carbon atoms,
   (2) α,β-ethylenically unsaturated carboxylic acids having 3 to 8 carbon atoms, and
   (3) optionally, a further monoethylenically unsaturated monomer compound;
   said copolymers having from 10 to 90% of carboxylic acid groups ionised by neutralization through metallic ions distributed over the copolymer, said film being obtained by blow co-extrusion of:
   (a) said polyolefin layer; and
   (b) said ionic copolymer layer;
   said blow co-extrusion being carried out under the following operating conditions:
   - a lengthwise stretch ratio of 2 to 25; and
   - a frost line height of less than 160 cm; the ratio$\frac{\text{Lengthwise stretch ratio}}{\text{Frost line height (in cm)}}$ being set so as to obtain a ratio of:$\frac{\text{Elmendorf tear strength in machine direction}}{\text{Elmendorf tear strength in substantially perpendicular direction}}$ higher than or equal to 2.

Preferably:
- the extrusion screw temperature for the ionic copolymer is comprised in the range of from 165 to 220°C,
- the extrusion screw temperature for the polyolefin is comprised in the range of from 170 to 220°C,
- the extrusion die temperature is comprised in the range of from 175 to 230°C,
- the blow-up ratio is comprised in the range of from 1 to 4,
- the winding speed is comprised in the range of from 5 to 80 m/min,
- the die block gap is comprised in the range of from 0.6 to 2.0 mm.

The ionic copolymers employed possess, when in the solid state, the characteristic properties of cross-linked polymers and, when in the softened state, the structural properties of non-cross-linked thermoplastic polymers.

The metallic ions generally have an ionized valency of from 1 to 3 inclusive when the unsaturated acid is a monocarboxylic acid and an ionized valency of 1 when the unsaturated acid is a dicarboxylic acid. The metallic ions can be selected from the group comprising complexed and non-complexed metallic ions.

The ionic copolymers that are most frequently employed are selected from the copolymers in which the α-olefin is ethylene and the α,β-ethylenically unsaturated carboxylic acid is a monocarboxylic or dicarboxylic acid and in which the metallic ions are complexed metallic ions, are metals belonging to groups II, III, IV-A and VIII of the Periodic Table, or are ions of a metal of group I of the Periodic Table and, more particularly an alkaline metal ion, which advantageously is sodium.

These ionic copolymers are know per se. They are fully described, together with their manufacturing process in United Stated Patent 3 264 272 the whole is incorporated herein for reference.

These copolymers are manufactured by E.I. Du Pont under the trade name Surlyn® for example. A preferred copolymer is Surlyn® 1601.

The expression "polyolefin" as employed in this present specification means homopolymers of α-olefins or copolymers of such olefins with one or several monomers, as well as mixtures thereof.
The homopolymer that is associated with the ionic copolymer can be selected from polymers of α-olefin of formula R′-CH=CH₂ in which R′ is hydrogen or an alkyl radical having 1 to 8 carbon atoms.

The α-olefin copolymer is a copolymer of the α-olefins of formula R′-CH=CH₂ above, with at least one further monoethylenically unsaturated monomers, such as aliphatic or aromatic monomer, the following of which can be cited by way of example: vinyl acetate, styrene, and (meth)acrylic derivatives. This other monomer can represent up to 20% by weight of the olefinic copolymer, preferably from 1 to 10% by weight.

Among the products that can be most recommended from an economic point of view, we can mention polymers and copolymers of ethylene and propylene such as polyethylene, polypropylene, copolymers of ethylene and propylene, ethylene-vinyl acetate copolymers, copolymers of ethylene and acrylic derivatives terpolymers based on olefin, methyl acrylate and ethyl acrylate or even mixtures of linear and radicalar low density polyolefins, as well as mixtures of the above (co)polymers.

One polyolefin in its preferred homopolymer form is low density polyethylene (LDPE). Another preferred polyolefin is a mixture of low density polyethylene and high density polyethylene (LDPE/HDPE). Their weight ratio is preferably comprised in the range 95/5 to 50/50.

The polyolefin in its preferred copolymer form is an ethylene/vinyl acetate (EVA) copolymer.

According to one embodiment of the present invention, the shrink film is a two-layer film comprising a polyolefin layer and an ionic copolymer layer.

In accordance with a further embodiment, the film is a multilayer film consisting of several layers of polyolefin and of ionic copolymer.

The total thickness of the shrink film according to the present invention is generally comprised in the range of from 20 to 300 µm, preferably from 40 to 150 µm.

In one embodiment, the total thickness of ionic copolymer, whether it is in one or several layer form, is 5 to 70%, preferably from 15 to 40% of the total film thickness.

When the film consists of at least three layers, how the various polyolefin and ionic copolymer layers are arranged with respect to each other is not important. How they are arranged with respect to each other has no effect on tearing in the direction transverse to the film extrusion direction.

In one embodiment of the present invention, the film consists of two layers, the ionic copolymer layer representing preferably about 20% of the thickness.

In another embodiment of the present invention, the film consists of three layers, the two outer layers being formed of ionic copolymer and each representing 10 to 25% of the total thickness of the film.

In another embodiment of the invention, the film consists of three layers, the inner layer being formed of ionic copolymer and representing 10 to 35% of the total thickness of the film.

The inclusion of an adhesion binder between the polyolefin layer and the ionic copolymer layer in order to optionally increase the adherence between the layers of different natures is also not ruled out. Such binders are known and currently employed in conventional co-extrusion processes; usually, such binders are modified ethylene-based copolymers or terpolymers.

The film according to the present invention is obtained using a method for producing the film characterized in that it comprises coextruding:
(a) at least one polyolefin layer; and
(b) at least one layer of an ionic copolymer.

The polyolefin and the ionic copolymer are co-extruded under particular conditions that yield the present films. Upon discharge from the die, the film is cooled on a cylinder the speed of rotation of which is higher than the film discharge rate, whereby the latter is subject to longitudinal orientation. At the outlet from the flat die, it is also possible, by employing known techniques, to subject it to flat bi-axial stretching.

The conditions under which blow co-extrusion is carried out are as follows. Extruder temperature for the ionic copolymer is comprised in the range of from 165 to 220°C, preferably from 170 to 180 °C. Extruder temperature for the polyolefin is comprised in the range of from 170 to 220°C, preferably from 175 to 185 °C. The temperature of the extrusion die is comprised in the range of from 165 to 230°C, preferably from 170 to 190 °C. The blow-up ratio is comprised in the range of from 1 to 4, and preferably from 1.5 to 2.5. The blow-up ratio is defined as:$\frac{\text{bubble diameter}}{\text{die head diameter}}$ The winding speed is comprised in the range of from 5 to 80 m/min, and preferably from 7 to 50 m/min. The extrusion gap is comprised in the range of from 0.6 to 2.0 mm, preferably from 1 to 1.6 mm.
The lengthwise stretch ratio is comprised in the range of from 2 to 25, preferably from 4 to 15, and more preferably from 5 to 10. The lengthwise stretch ratio is defined as:$\frac{\text{winding speed of the solid film}}{\text{speed of the melt at die exit}}$

The frost line height, used to obtain rapid cooling to obtain crystallization in the same direction is less than 160 cm, preferably less than 80 cm, and particularly preferably comprised in the range 20 to 40 cm.

The film according to the invention is obtained by varying the lengthwise stretch ratio and frost line height parameters to provide a ratio:$\frac{\text{MD}}{\text{TD}} \text{=} \frac{\text{Elmendorf tear strength in machine direction}}{\text{Elmendorf tear strength in substantially perpendicular direction}}$ higher than or equal to 2, preferably higher than 5.

The actual MD/TD Elmendorf tear ratios obtained will vary based on changes in a number of other conditions such as the polymers used, the thickness of each film layer, and the equipment used. In general, the extrusiuon temperature for each polymer used should be as low as posssible so as to keep the frost line as close to the die as possible.

In a preferred embodiment, the ratio:$\frac{\text{Lengthwise stretch ratio}}{\text{Frost line height (in cm)}}$ is higher than 0.1, and preferably higher than 0.2.

The invention also relates to the particular procedure for blow co-extrusion that yields the present films.

Apart from bundling, the films according to the invention can be employed in all packaging applications such as, for example, the manufacture of shrink overwraps for palletizing or bagging goods.

The invention not only relates to the packaging film, but also to packaging produced using this film. More specifically, the invention relates to a package which comprises a linear array of articles to be bundled, such as beverage bottles and cans, and a thermoplastic film according to the invention shrunken around the articles such that the transverse direction of tear of the package is transverse to the packaging direction of the array of articles.

Obviously, the present invention is not limited to the examples below provided by way of illustration.

### EXAMPLE 1

The three-layer film below was formed from:
. outer layer of resin A: 12.5% of total thickness
. intermediate layer of resin B: 75% of total thickness
. outer layer of resin A: 12.5% of total thickness
. total thickness: 70 µm.
   - resin A: modified ethylene-methacrylic acid copolymer neutralized by a sodium or zinc type cation having a fluidity index at 2.15 kg and 190°C in accordance with the NFT 51016 standard of 0.5 g to 5 g and a density of 0.940 g/cm³;
   - resin B: ethylene-vinyl acetate copolymer (having 2% and more of vinyl acetate) of fluidity index at 2.16 kg and 190°C in accordance with NFT 51016 of 0.8 to 3 g and a density of 0.919 to 0.940 g/cm³.

Co-extrusion was carried out at a screw temperature of 175°C for resin A and 180°C for resin B, the extruder end temperature being 190°C, a winding speed of 56 m/min, a blow-up ratio of 2, a die gap of 1.2 mm, a throughput of 120 kg/h, the extruder being a Windmöller machine, the lengthwise stretch ratio was 6.9 and frost line setting was about 65 cm. A film was obtained for which the Elmendorf tear strength ratio (MD/TD) is greater than 7.

Under conventional bundling conditions, a variety of objects such as canned foods were packaged using these films. By simply obtaining initiation of tearing, obtained through the use of a tab cut out in the transverse sense when manufacturing the pack, it was possible to open the pack simply by pulling the tab, obtaining a clean tear in the film without exercising any particular force. Before any action was performed on the tab, the film maintained all its shrink and tear resistance properties required during its various handling operations.

### EXAMPLE 2

A 45 µm film obtained under the extrusion conditions of example 1 was tested.

The results of tearing in accordance with the the NFQ 03011 standard with tearing initiated were as follows:

| Surlyn® 1601 | Tearing in centinewtons in the machine direction (MD) | Tearing in centinewtons in a direction substantially perpendicular thereto (TD) |
|---|---|---|
| single layer of 45 µm | 50 | 100 |

| double layer of 45 µm: | | |
|---|---|---|
| 20% Surlyn® 1601 | | |
| 80% polyethylene | 500 | 100 |

| Triple layer of 45 µm: | | |
|---|---|---|
| 16% Surlyn® 1601 | | |
| 68% polyethylene | | |
| 16% Surlyn® 1601 | 500 | 100 |

The percentages given are thickness percentages.

It is seen that tear resistance in the substantially perpendicular sense of the co-extruded materials stays similar to that of Surlyn® used alone, while tearing in the machine direction increases up to values currently required for bundling purposes.

### EXAMPLE 3

The following three-layer film was extruded:

| | |
|---|---|
| . LDPE Novex® 21H460 | 43.1 µm |
| . Surlyn® 1601 | 28.7 µm |
| . LDPE Novex 21H460 | 43.1 µm |
| Total thickness | 115 µm |

Surlyn® 1601 is an ionic copolymer available from Dupont, of the sodium neutralised type with a melt index MI of 1.3.

Novex® is a LDPE available from British Petroleum (BP) having a melt index of 1.5 and a density of 0.922.

The extruder for each layer was a Reifenhauser 50 mm extruder and operating conditions were as follows:

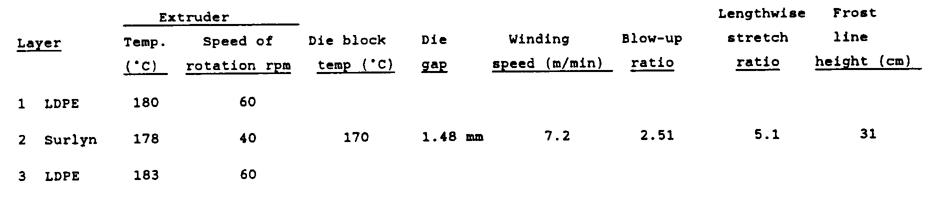

A film was obtained for which the Elmendorf tear strengths and their ratio were the following:$\frac{\text{MD}}{\text{TD}} \text{=} \frac{\text{39.9}}{\text{10.9}} \text{= 3.7}$

### EXAMPLE 4

Operating conditions were as follows:

| Layer | Thickness |
|---|---|
| 1 . LDPE Novex® 21H460 | 43.1 µm |
| 2 . Surlyn® 1601 | 28.7 µm |
| 3 . LDPE Novex 214460 | 43.1 µm |
| Total thickness | 115 µm |

The height of the frost line this time was 43 cm. The other operating parameters were identical to those in example 3.

A film was obtained for which the Elmendorf tear strengths and their ratio were the following:$\frac{\text{MD}}{\text{TD}} \text{=} \frac{\text{35.2}}{\text{11.3}} \text{= 3.1}$

### EXAMPLE 5

The constitution of the film was as follows:

| Layer | Thickness |
|---|---|
| 1 . LDPE Novex® 21H460 | 31 µm |
| 2 . Surlyn® 1601 | 21 µm |
| 3 . LDPE Novex 214460 | 31 µm |
| Total thickness | 83 µm |

Operating conditions were identical to those in Example 4, except for the winding speed which was 9.4 m/min. A film was obtained for which the Elmendorf tear strengths and their ratio were the following:$\frac{\text{MD}}{\text{TD}} \text{=} \frac{\text{45.1}}{\text{10.3}} \text{= 4.4}$

### EXAMPLE 6 (comparative example)

Operating conditions were identical to those in Example 5, but the frost line was set to 120 cm. This time, a film was obtained for which the Elmendorf tear strengths and their ratio were the following:$\frac{\text{MD}}{\text{TD}} \text{=} \frac{\text{7.1}}{\text{9.1}} \text{= 0.7}$

### EXAMPLE 7

The operating conditions were as follows:

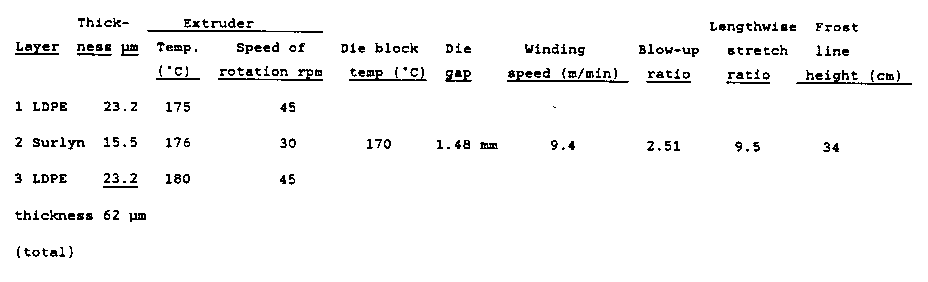

A film was obtained for which the Elmendorf tear strengths and their ratio were the following:$\frac{\text{MD}}{\text{TD}} \text{=} \frac{\text{46.6}}{\text{4.2}} \text{= 11.1}$

### EXAMPLE 8

The following operating conditions were employed:

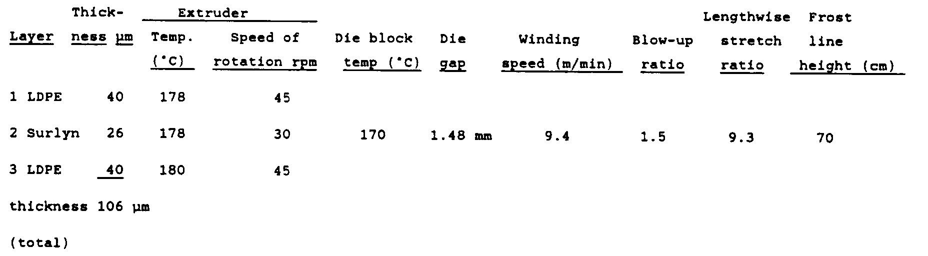

A film was obtained for which the Elmendorf tear strengths and their ratio were the following:$\frac{\text{MD}}{\text{TD}} \text{=} \frac{\text{67.1}}{\text{12.8}} \text{= 5.2}$

### EXAMPLE 9

A film of the following composition:
Layer 1:
   - A mixture of:: 80% by weight LDPE (d: 0.923; MI: 0.30)
   20% by weight HDPE (d: 0.963; MI: 8.0)
   - and containing:: 750 ppm SiO₂
   1000 ppm alkyl amine
Layer 2: Surlyn® 1601
Layer 3: identical to layer 1
was extruded under the following operating conditions:

| Layer | Thickness % | Extruder | | Die block temp (°C) | Die gap | Blow-up ratio | Lengthwise stretch ratio | Frost line height (cm) |
|---|---|---|---|---|---|---|---|---|
| | | Temp. (°C) | Speed of rotation rpm | | | | | |
| 1 | 37.5 | 172.5 | 160 | | | | | |
| 2 | 25 | 172.5 | 45 | 177.5 | 1.2 mm | 2.9 | 6.0 | 54 |
| 3 | 37.5 | 172.5 | 58 | | | | | |
| Total | 100 % | | | | | | | |

A film was obtained for which the Elmendorf tear test gave the following ratio:$\frac{\text{MD}}{\text{TD}} \text{= 7.2}$

## Claims

1. A shrinkable thermoplastic film comprising:
(a) at least one polyolefin layer; and
(b) at least one layer of a copolymer selected from ionic copolymers of:
(1) α-olefins of formula R-CH=CH₂ wherein R is hydrogen or an alkyl radical having 1 to 8 carbon atoms,
(2) α,β-ethylenically unsaturated carboxylic acids having 3 to 8 carbon atoms, and
(3) optionally, a further monoethylenically unsaturated monomer compound;
said copolymers having from 10 to 90% of carboxylic acid groups ionised by neutralization through metallic ions distributed over the copolymer, said film being characterized in that it is obtained by blow co-extrusion of:
(a) said polyolefin layer; and
(b) said ionic copolymer layer; said blow co-extrusion being carried out under the following operating conditions:
- a lengthwise stretch ratio of 2 to 25; and
- a frost line height of less than 160 cm; the ratio$\frac{\text{Lengthwise stretch ratio}}{\text{Frost line height (in cm)}}$ being set so as to obtain a ratio of:$\frac{\text{Elmendorf tear strength in machine direction}}{\text{Elmendorf tear strength in substantially perpendicular direction}}$ higher than or equal to 2.

2. A shrinkable thermoplastic film according to claim 1 characterized in that said lengthwise stretch ratio is comprised in the range of from 4 to 15, preferably in the range of from 5 to 10, and said frost line height is less than 80 cm and preferably is comprised in the range of from 20 to 40 cm.

3. A shrinkable thermoplastic film according to claim 1 or 2, characterized in that said ratio:$\frac{\text{Lengthwise stretch ratio}}{\text{Frost line height (in cm)}}$ is higher than 0.1 and preferably is higher than 0.2

4. A shrinkable thermoplastic film according to any one of claims 1 to 3, characterized in that said ratio:$\frac{\text{Elmendorf tear strength in machine direction}}{\text{Elmendorf tear strength in substantially perpendicular direction}}$ is higher than 5.

5. A shrinkable thermoplastic film according to any one of claims 1 to 4, characterized in that said blow co-extrusion is carried out under the following operating conditions:
- an extrusion screw temperature for the ionic copolymer comprised in the range of from 165 to 220°C,
- an extrusion screw temperature for the polyolefin comprised in the range of from 170 to 220°C,
- an extrusion die temperature comprised in the range of from 175 to 230°C,
- a blow-up ratio comprised in the range of from 1 to 4,
- a winding speed comprised in the range of from 5 to 80 m/min, and
- a die block gap comprised in the range of from 0.6 to 2.0 mm.

6. A shrinkable thermoplastic film according to any one of claims 1 to 5, characterized in that said blow co-extrusion is carried out under the following operating conditions:
- an extrusion screw temperature for the ionic copolymer comprised in the range of from 170 to 180°C,
- an extrusion screw temperature for the polyolefin comprised in the range of from 175 to 185°C,
- an extrusion die temperature comprised in the range of from 185 to 195°C,
- a blow-up ratio comprised in the range of from 1.5 to 2.5,
- a lengthwise stretch ratio comprised in the range of from 4 to 20,
- a winding speed comprised in the range of from 7 to 50 m/min, and
- a die block gap comprised in the range of from 1 to 1.6 mm,
- the frost line height being selected such that the ratio$\frac{\text{Lengthwise stretch ratio}}{\text{Frost line height (in cm)}}$ is higher than 0.1.

7. A shrinkable thermoplastic film according to any one of claims 1 to 6, characterized in that the ionic copolymer is a copolymer of ethylene and mono- or dicarboxylic acid in which the metal ions are complexed metal ions belonging to groups II, III, IV-A and VIII of the Periodic Table, and are preferably alkaline metal ions, particularly sodium.

8. A shrinkable thermoplastic film according to any one of claims 1 to 7, characterized in that the polyolefin is selected from homopolymer of R'-CH=CH₂ α-olefins in which R' is hydrogen or an alkyl radical having 1 to 8 carbon atoms.

9. A shrinkable thermoplastic film according to any one of claims 1 to 7, characterized in that the polyolefin is a compound selected from the group comprising polyethylene and low density polyethylene (LDPE).

10. A shrinkable thermoplastic film according to claim 9, characterized in that said polyethylene is a mixture of low density polyethylene and high density polyethylene (LDPE/HDPE), the weight ratio of low density polyethylene and high density polyethylene (LDPE/HDPE) being preferably comprised in the range from 95/5 to 50/50.

11. A shrinkable thermoplastic film according to any one of claims 1 to 7, characterized in that the polyolefin is a copolymer of R'-CH=CH₂ α-olefin in which R' is hydrogen or an alkyl radical having 1 to 8 carbon atoms, and a monoethylenically unsaturated monomer and is preferably an ethylene/vinyl acetate (EVA) copolymer.

12. A shrinkable thermoplastic film according to any one of claims 1 to 11, characterized in that the total thickness of said layer or layers of ionic copolymer constitutes 5 to 70% of the total thickness of said film and preferably 15 to 40% of the total thickness of said film.

13. A shrinkable thermoplastic film according to any one of claims 1 to 12, characterized in that the thickness of said film is comprised between 20 and 300 µm and preferably between 40 and 150 µm.

14. A shrinkable thermoplastic film according to any one of claims 1 to 13, characterized in that said film consists of at least two layers and preferably of at least three layers.

15. A shrinkable thermoplastic film according to claim 14, characterized in that it consists of three layers, the two outer layers being formed of ionic copolymer and each representing from 10 to 25% of the total thickness of said film.

16. A shrinkable thermoplastic film according to claim 14 or 15, characterized in that it consists of three layers, the internal layer being formed of ionic copolymer constituting from 10 to 35% of the total film thickness.

17. A packaging produced using the shrinkable thermoplastic film according to any one of claims 1 to 16.

18. A package which comprises a linear array of articles to be bundled and a thermoplastic film according to any one of claims 1 to 16 shrunken around said articles such that the transverse direction of tear of said package is transverse to the packaging direction of said array of articles.

## Patentansprüche

1. Schrumpfbare, thermoplastische Folie, umfassend:
(a) mindestens eine Polyolefinschicht; und
(b) mindestens eine Schicht eines Copolymeren, ausgewählt aus ionischen Copolymeren von:
(1) α-Olefinen der Formel R-CH=CH₂, worin R ein Wasserstoff oder ein Alkylrest mit 1 bis 8 Kohlenstoffatomen ist,
(2) α,β-ethylenisch ungesättigten Carboxylsäuren mit 3 bis 8 Kohlenstoffatomen und
(3) gegebenenfalls einer weiteren monoethylenisch ungesättigten Monomerenverbindung;
wobei die Copolymere von 10 bis 90% an über das Copolymer verteilte Carboxylsäuregruppen besitzen, welche durch Neutralisation mit Metallionen ionisiert sind, wobei die Folie dadurch gekennzeichnet ist, daß sie durch Blascoextrudieren von:
(a) der Polyolefinschicht und
(b) der ionischen Copolymerenschicht
erhalten wird, wobei das Blascoextrudieren unter den folgenden Betriebsbedingungen durchgeführt wird:
- ein Längsreckverhältnis von 2 bis 25 und
- ein Abstand der Kristallisationsgrenze von weniger als 160 cm, wobei das Verhältnis von$\frac{\text{Längsreckverhältnis}}{\text{Abstand der Kristallisationsgrenze (in cm)}}$ so eingestellt wird, daß ein Verhältnis von:$\frac{\text{Zerreißfestigkeit nach Elmendorf in Maschinenrichtung}}{\text{Zerreißfestigkeit nach Elmendorf im wesentlichen in senkrechter Richtung}}$ mit mehr als oder gleich 2 erhalten wird.

2. Schrumpfbare, thermoplastische Folie gemäß Anspruch 1, dadurch gekennzeichnet, daß das Längsreckverhältnis im Bereich von 4 bis 15, vorzugsweise im Bereich von 5 bis 10, liegt, und der Abstand der Kristallisationsgrenze weniger als 80 cm beträgt und vorzugsweise im Bereich von 20 bis 40 cm liegt.

3. Schrumpfbare, thermoplastische Folie gemäß Anspruch 1 oder 2, dadurch gekennzeichnet, daß das Verhältnis:$\frac{\text{Längsreckverhältnis}}{\text{Abstand der Kristallisationsgrenze (in cm)}}$ höher als 0,1 ist und vorzugsweise höher als 0,2 ist.

4. Schrumpfbare, thermoplastische Folie gemäß einem der Ansprüche 1 bis 3, dadurch gekennzeichnet, daß das Verhältnis:$\frac{\text{Zerreißfestigkeit nach Elmendorf in Maschinenrichtung}}{\text{Zerreißfestigkeit nach Elmendorf im wesentlichen in senkrechter Richtung}}$ höher als 5 ist.

5. Schrumpfbare, thermoplastische Folie gemäß einem der Ansprüche 1 bis 4, dadurch gekennzeichnet, daß das Blascoextrudieren unter den folgenden Betriebsbedingungen durchgeführt wird:
- eine Extruderschneckentemperatur für das ionische Copolymer, welche im Bereich von 165 bis 220°C liegt,
- eine Extruderschneckentemperatur für das Polyolefin, welche im Bereich von 170 bis 220°C liegt,
- eine Extruderdüsentemperatur, welche im Bereich von 175 bis 230°C liegt,
- ein Aufblasverhältnis, welches im Bereich von 1 bis 4 liegt,
- eine Wickelgeschwindigkeit, welche im Bereich von 5 bis 80 m/min liegt, und
- ein Düsenblockspalt, welcher im Bereich von 0,6 bis 2,0 mm liegt.

6. Schrumpfbare, thermoplastische Folie gemäß einem der Ansprüche 1 bis 5, dadurch gekennzeichnet, daß das Blascoextrudieren unter den folgenden Betriebsbedingungen durchgeführt wird:
- eine Extruderschneckentemperatur für das ionische Copolymer, welche im Bereich von 170 bis 180°C liegt,
- eine Extruderschneckentemperatur für das Polyolefin, welche im Bereich von 175 bis 185°C liegt,
- eine Extruderdüsentemperatur, welche im Bereich von 185 bis 195°C liegt,
- ein Aufblasverhältnis, welches im Bereich von 1,5 bis 2,5 liegt,
- ein Längsreckverhältnis, welches im Bereich von 4 bis 20 liegt,
- eine Wickelgeschwindigkeit, welche im Bereich von 7 bis 50 m/min liegt, und
- ein Düsenblockspalt, welcher im Bereich von 1 bis 1,6 mm liegt,
- wobei der Abstand der Kristallisationsgrenze so gewählt ist, daß das Verhältnis$\frac{\text{Längsreckverhältnis}}{\text{Abstand der Kristallisationsgrenze (in cm)}}$ höher als 0,1 ist.

7. Schrumpfbare, thermoplastische Folie gemäß einem der Ansprüche 1 bis 6, dadurch gekennzeichnet, daß das ionische Copolymer ein Copolymer von Ethylen und einer Mono- oder Dicarbonsäure ist, in welcher die Metallionen komplexierte Metallionen sind, welche den Gruppen II, III, IV-A und VIII des Periodensystems angehören und vorzugsweise Alkalimetallionen, insbesondere Natrium, sind.

8. Schrumpfbare, thermoplastische Folie gemäß einem der Ansprüche 1 bis 7, dadurch gekennzeichnet, daß das Polyolefin aus einem Homopolymer von R'-CH=CH₂ α-Olefinen ausgewählt ist, in welchen R' Wasserstoff oder ein Alkylrest mit 1 bis 8 Kohlenstoffatomen ist.

9. Schrumpfbare, thermoplastische Folie gemäß einem der Ansprüche 1 bis 7, dadurch gekennzeichnet, daß das Polyolefin eine aus der Polyethylen und Hochdruck-Polyethylen (LDPE) enthaltenden Gruppe ausgewählte Verbindung ist.

10. Schrumpfbare, thermoplastische Folie gemäß Anspruch 9, dadurch gekennzeichnet, daß das Polyethylen eine Mischung aus Hochdruck-Polyethylen und Niederdruck-Polyethylen (LDPE/HDPE) ist, wobei das Gewichtsverhältnis von Hochdruck-Polyethylen und Niederdruck-Polyethylen (LDPE/HDPE) vorzugsweise im Bereich von 95/5 bis 50/50 liegt.

11. Schrumpfbare, thermoplastische Folie gemäß einem der Ansprüche 1 bis 7, dadurch gekennzeichnet, daß das Polyolefin ein Copolymer eines R'-CH=CH₂ α-Olefins, in welchem R' Wasserstoff oder ein Alkylrest mit 1 bis 8 Kohlenstoffatomen ist, und eines monoethylenisch ungesättigtem Monomeren ist und vorzugsweise ein Ethylen/Vinylacetat-(EVA)-Copolymer ist.

12. Schrumpfbare, thermoplastische Folie gemäß einem der Ansprüche 1 bis 11, dadurch gekennzeichnet, daß die Gesamtdicke der Schicht oder der Schichten des ionischen Copolymeren 5 bis 70% der Gesamtdicke der Folie und vorzugsweise 15 bis 40% der Gesamtdicke der Folie ausmachen.

13. Schrumpfbare, thermoplastische Folie gemäß einem der Ansprüche 1 bis 12, dadurch gekennzeichnet, daß die Dicke der Folie zwischen 20 und 300 µm und vorzugsweise zwischen 40 und 150 µm beträgt.

14. Schrumpfbare, thermoplastische Folie gemäß einem der Ansprüche 1 bis 13, dadurch gekennzeichnet, daß die Folie aus mindestens zwei Schichten und vorzugsweise aus mindestens drei Schichten besteht.

15. Schrumpfbare, thermoplastische Folie gemäß Anspruch 14, dadurch gekennzeichnet, daß sie aus drei Schichten besteht, wobei die beiden äußeren Schichten aus einem ionischen Copolymer gebildet sind, und jede von 10 bis 25% der Gesamtdicke der Folie ausmacht.

16. Schrumpfbare, thermoplastische Folie gemäß Anspruch 14 oder 15, dadurch gekennzeichnet, daß sie aus drei Schichten besteht, wobei die innere Schicht aus einem ionischen Copolymer gebildet ist, welche von 10 bis 35% der Gesamtfoliendicke ausmacht.

17. Verpackung, hergestellt unter Verwendung der schrumpfbaren, thermoplastischen Folie gemäß einem der Ansprüche 1 bis 16.

18. Verpackung, welche eine lineare Anordnung von zu bündelnden Artikeln und eine thermoplastische Folie gemäß einem der Ansprüche 1 bis 16 umfaßt, welche so um die Artikel herum geschrumpft ist, daß die Querreißrichtung der Verpackung quer zu der Abpackrichtung der Anordnung von Artikeln ist.

## Revendications

1. Film thermoplastique rétractable formé de:
(a) au moins une couche de polyoléfine; et
(b) au moins une couche d'un copolymère choisi parmi les copolymères ioniques de:
(1) α-oléfines de formule R-CH=CH₂ dans laquelle R est de l'hydrogène ou un radical alkyle possédant de 1 à 8 atomes de carbone,
(2) acides carboxyliques α, β-éthyléniquement insaturés possédant de 3 à 8 atomes de carbone, et
(3) éventuellement un autre composé monomère monoéthyléniquement insaturé;
- lesdits copolymères comportant de 10% à 90% de groupements acides carboxyliques ionisés par neutralisation par des ions métalliques distribués sur le copolymère;
- ledit film étant caractérisé en ce qu'il est obtenu par coextrusion-soufflage de:
(a) ladite couche de polyoléfine; et
(b) ladite couche de copolymère ionique;
- ladite coextrusion-soufflage étant mise en oeuvre dans les conditions opératoires suivantes:
- taux de tirage longitudinal de 2 à 25; et
- hauteur de ligne de cristallisation inférieure à 160 cm.
Le rapport:$\frac{\text{Taux de tirage longitudinal}}{\text{Hauteur de la ligne de cristallisation (exprimée en cm)}}$ étant ajusté de façon à obtenir un rapport:$\frac{\text{Force Elmendorf de déchirure dans le sens machine}}{\text{Force Elmendorf de déchirure dans le sens sensiblement perpendiculaire}}$ supérieur ou égal à 2.

2. Film thermoplastique rétractable selon la revendication 1, caractérisé en ce que ledit taux de tirage est de 4 à 15; de préférence de 5 à 10 et ladite hauteur de ligne de cristallisation est inférieure à 80 cm et est de préférence de 20 à 40 cm.

3. Film thermoplastique rétractable selon les revendications 1 ou 2, caractérisé en ce ledit rapport:$\frac{\text{Taux de tirage longitudinal}}{\text{Hauteur de la ligne de cristallisation (en cm)}}$ est supérieur à 0,1 et de préférence, supérieur à 0,2.

4. Film thermoplastique rétractable selon les revendications 1 à 3, caractérisé en ce que ledit rapport:$\frac{\text{Force Elmendorf de déchirure dans le sens machine}}{\text{Force Elmendorf de déchirure dans le sens sensiblement perpendiculaire}}$ est supérieure à 5

5. Film thermoplastique rétractable selon une quelconque des revendications 1 à 4, caractérisé en ce que ladite coextrusion soufflage est mise en oeuvre dans les conditions suivantes:
- température de la vis pour ledit copolymère ionique de 165 à 220°C,
- température de la vis pour ladite polyoléfine de 170 à 220°C,
- température de la tête d'extrudeuse de 175 à 230°C,
- taux de gonflage de 1 à 4,
- vitesse de bobinage de 5 à 80 m/mn,
- entrefer d'extrusion de 0,6 à 2,0 mm,

6. Film thermoplastique selon une quelconque des revendications 1 à 5, caractérisé en ce que les conditions opératoires de la coextrusion-soufflage sont les suivantes:
- température de la vis pour le copolymère ionique de 170 à 180°C,
- température de la vis pour la polyoléfine de 175 à 185°C,
- température de la tête d'extrudeuse de 185 à 195°C
- taux de gonflage de 1,5 à 2,5,
- taux de tirage longitudinal de 4 à 20,
- vitesse de bobinage de 7 à 50 m/mn, et
- entrefer d'extrusion de 1 à 1,6 mm.
- hauteur de ligne cristallisation choisie de façon que le rapport:$\frac{\text{Taux de tirage longitudinal}}{\text{Hauteur de la ligne de cristallisation (en cm)}}$ soit supérieur à 0,1

7. Film thermoplastique rétractable selon une quelconque des revendications 1 à 6, caractérisé en ce que le copolymère ionique est un copolymère d'éthylène et d'acide mono- ou dicarboxylique dans lequel les ions métalliques sont des ions métalliques complexés appartenant aux groupes II, III, IV-A et VIII du tableau périodique et sont de préférence des ions de métal alcalin, en particulier sodium.

8. Film thermoplastique rétractable selon l'une quelconque des revendications 1 à 7, caractérisé en ce que la polyoléfine est choisie parmi les homopolymères d'α-oléfines R'-CH=CH₂ dans laquelle R' est l'hydrogène ou un radical alkyle possédant de 1 à 8 atomes de carbone.

9. Film thermoplastique rétractable selon les revendications 1 à 7, caractérisé en ce que la polyoléfine est un composé choisi dans le groupe comprenant le polyéthylène et le polyéthylène basse densité (LDPE).

10. Film thermoplastique rétractable selon la revendication 9, caractérisé en ce que le polyéthylène est un mélange polyéthylène basse densité/polyéthylène haute densité, (LDPE/HDPE), le rapport massique du polyéthylène basse densité au polyéthylène haute densité LDPE/HDPE étant compris de préférence entre 95/5 et 50/50.

11. Film thermoplastique rétractable selon l'une quelconque des revendications 1 à 7, caractérisé en ce que la polyoléfine est un copolymère de l'α-oléfine R'-CH=CH₂ dans laquelle R' est l'hydrogène ou un radical alkyle possédant de 1 à 8 atomes de carbone et d'un monomère monoéthyléniquement insaturé et est de préférence un copolymère éthylène/acétate de vinyle (EVA).

12. Film thermoplastique rétractable selon l'une quelconque des revendications 1 à 11, caractérisé en ce que l'épaisseur totale de la ou des couches de copolymère ionique représente de 5 à 70% de l'épaisseur totale du film thermoplastique rétractable et de préférence de 15 à 40% de l'épaisseur totale du film thermoplastique rétractable.

13. Film thermoplastique rétractable selon l'une quelconque des revendications 1 à 12, caractérisé en ce que l'épaisseur dudit film est comprise entre 20 et 300 µm et de préférence est comprise entre 40 et 150 µm.

14. Film thermoplastique rétractable selon l'une quelconque des revendications 1 à 22, caractérisé en ce qu'il est constitué de 2 couches et de préférence, d'au moins trois couches.

15. Film thermoplastique rétractable selon la revendication 14, caractérisé en ce qu'il est constitué de trois couches, les deux couches externes étant formées de copolymère ionique, représentant chacune de 10 à 25% de l'épaisseur totale du film.

16. Film thermoplastique rétractable selon la revendication 14 ou 15, caractérisé en ce qu'il est constitué de trois couches, la couche interne étant formée de copolymère ionique représentant de 10 à 35% de l'épaisseur totale.

17. Emballage fabriqué à partir du film thermoplastique rétractable selon l'une quelconque des revendications 1 à 26.

18. Emballage qui comprend une rangée linéaire d'articles à réunir et un film thermoplastique, selon une quelconque des revendications 1 à 16, entourant étroitement lesdits articles de façon que la direction transversale d'ouverture par déchirure dudit emballage soit transverse au sens d'empaquetage de ladite rangée d'articles.
